# FASCICULE DE BREVET EUROPEEN

(11) **EP 1 757 477 B1**
(45) Date de publication et mention de la délivrance du brevet: **22.04.2009**
(21) Numéro de dépôt: 06025330.9
(22) Date de dépôt: 11.12.2001
(51) Int. Cl.: B60H 1/00

(54) **Agencement de palier de clapet d'air**
Lageranordnung von Luftklappen
Arrangement of damper door bearings

(30) Priorité: 13.12.2000 DE 10062034
(43) Date de publication de la demande: 28.02.2007
(62) Demande divisionnaire de: 01270432.6
(73) Titulaire: Valeo Klimasysteme GmbH, 96476 Rodach (DE)
(72) Inventeur: Schmidt, Hendrik, 38304 Wolfenbüttel (DE); Wichert, Volker, 38302 Wolfenbüttel (DE); Rudloff, Emmanuel, 72470 Champagné (FR)
(74) Mandataire: Léveillé, Christophe

(56) Documents cités:
- EP-A- 0 680 839
- DE-A1- 19 808 223
- PATENT ABSTRACTS OF JAPAN vol. 005, no. 053 (M-063), 14 avril 1981 (1981-04-14) -& JP 56 008713 A (NISSAN MOTOR CO LTD;OTHERS: 01), 29 janvier 1981 (1981-01-29)

## Description

La présente invention concerne généralement une installation de chauffage, ventilation et/ou climatisation de véhicules à moteur comprenant un agencement de palier de clapet d'air.

Les clapets d'air articulés au moyen d'un tel agencement de palier peuvent être réalisés sous la forme de ce qu'on appelle des clapets à drapeaux, des clapets à papillon ou aussi des clapets à coquille. Habituellement, de tels clapets d'air sont intégrés de manière pivotante entre deux positions au moyen d'un palier fixe dans un boîtier de guidage d'air de l'installation de chauffage, ventilation et/ou climatisation, une charge étant appliquée à chaque fois séparément pour chaque clapet d'air habituellement au niveau du point d'articulation, c'est-à-dire du palier fixe.

Le document JP 56-8713 divulgue une installation selon le préambule de la revendication 1.

Il existe le besoin d'un agencement de palier de clapet d'air amélioré qui permette une utilisation polyvalente.

L'objet de la présente invention est donc de proposer un agencement de palier de clapet d'air au moyen duquel une interaction améliorée entre le clapet d'air sur palier ou articulé et d'autres éléments de l'installation associée de chauffage, ventilation et/ou climatisation soit possible, afin par exemple de fournir au clapet d'air un guidage amélioré, de solliciter de manière variable le clapet d'air, ou également de pouvoir accoupler l'un à l'autre de manière efficace des clapets d'air différents.

Conformément à l'invention, l'objectif ci-dessus est réalisé par un agencement de palier de clapet d'air ayant les caractéristiques de la revendication 1. Des perfectionnements avantageux des agencements de palier de clapet d'air selon l'invention sont indiqués dans les revendications secondaires.

En particulier, l'invention propose un agencement de palier de clapet d'air ayant au moins un palier fixe et au moins un palier libre. Grâce à la fourniture d'un palier libre en plus du palier fixe habituellement utilisé, on peut améliorer la cinématique des clapets d'air concernés, par exemple en réalisant une interaction entre le clapet d'air monté mobile et la structure de boîtier de guidage d'air environnante, en intercalant le palier libre. L'utilisation d'un palier libre permet également d'adapter à la position la sollicitation de la force appliquée au clapet d'air.

Par exemple, si l'on accouple une sollicitation de force linéaire d'orientation fixe au clapet d'air par le biais du palier libre, le vecteur de force s'étendant perpendiculairement au clapet d'air variera en fonction de la position angulaire du clapet d'air.

Dans une forme de réalisation préférée, le palier libre comprend un palier lisse qui peut être réalisé en particulier sous la forme d'une broche guidée dans un trou oblong. Grâce à la fourniture d'un palier lisse, on peut tenir compte de manière particulièrement simple de la cinématique lors du pivotement du clapet d'air.

Avantageusement, le palier libre permet un mouvement relatif essentiellement dans la direction de l'étendue du clapet d'air concerné. Grâce à cette configuration, la sollicitation d'un clapet d'air ou aussi la sollicitation par le clapet d'air concerné peuvent être également divisées en vecteurs de force, qui s'étendent parallèlement et perpendiculairement au clapet d'air ou au sens de déplacement du clapet d'air.

Dans l'agencement de palier de clapet d'air selon l'invention, un clapet d'air peut être sollicité par le biais du palier fixe et/ou du palier libre. A titre d'exemple, on pourrait se représenter qu'un clapet d'air soit précontraint au moyen d'un ressort spiral dans le cas d'un palier fixe, tandis que le réglage du clapet d'air s'effectue par le biais du palier libre, par l'action sur celui-ci d'une tige de transmission ou d'une bielle, par exemple.

Dans une forme de réalisation préférée, le palier libre est espacé du palier fixe. Par un espacement entre le palier libre et le palier fixe, on peut utiliser avantageusement l'effet de levier réalisé par l'espacement.

De manière avantageuse, le palier libre est disposé essentiellement centralement dans le clapet d'air, dans au moins l'une des directions d'étendue de celui-ci. L'agencement central permet une répartition uniforme des forces lors d'une sollicitation du clapet d'air par le biais du palier libre ou par le blais d'une utilisation élevée de force lorsqu'une force agissant sur le clapet d'air doit être évacuée.

Afin de pouvoir réaliser un accouplement entre plusieurs clapets d'air, par exemple deux clapets d'air, on prévoit selon l'invention un dispositif accouplant au moins deux clapets d'air.

Dans une forme de réalisation particulièrement prétérée, ce dispositif accouplant au moins deux clapets d'air peut être réalisé sous la forme d'une bascule ou d'un joug.

Selon l'invention le dispositif d'accouplement est amené en engagement avec au moins deux clapets d'air, en particulier avec chaque clapet d'air, par le biais du palier libre. Si l'on prévoit par exemple un agencement de palier pour deux clapets, les mouvements des deux clapets peuvent facilement être accouplés l'un à l'autre, sans devoir modifier les cinématiques individuelles respectives des clapets. Le dispositif d'accouplement dispose d'un palier, en particulier d'un palier fixe, afin de pouvoir fournir une interaction, par exemple une articulation par rapport au boîtier de guidage d'air de l'installation de chauffage, ventilation et/ou climatisation.

Finalement, on préfère qu'au moins un clapet d'air puisse être sollicité par la sollicitation d'un autre clapet d'air dans le sens opposé à celui-ci. Grâce à cette configuration; on peut réaliser au moyen de deux clapets à drapeaux ou fanions séparés l'un de l'autre, la fonction d'un clapet à papillon avec une meilleure cinématique et répartition de force.

D'autres avantages et caractéristiques de l'invention résultent en outre de la description suivante d'une mise en oeuvre actuellement préférée d'une forme de réalisation préférée de l'agencement de palier de clapet d'air selon l'invention, comme décrit uniquement à titre d'exemple ci-après en référence aux dessins annexés, dans lesquels:
la figure 1 illustre en vue latérale schématique un agencement de deux clapets d'air et d'un dispositif les accouplant,
la figure 2 illustre l'agencement illustré dans la figure 1 en représentation en perspective.

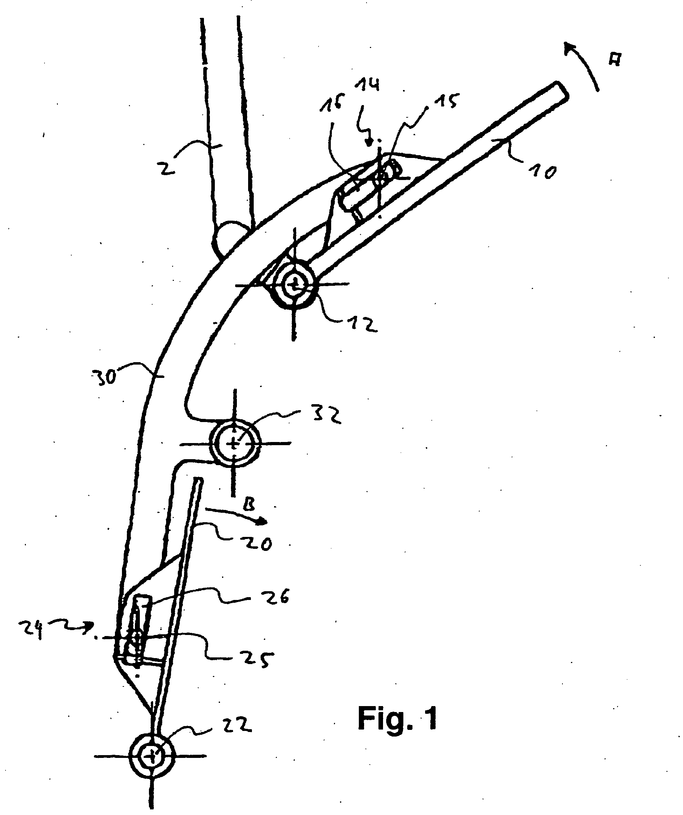

La figure 1 illustre en vue latérale schématique, un exemple d'application d'une forme de réalisation préférée d'un agencement de palier de clapet d'air selon l'invention, qui est prévu par exemple dans un boîtier de guidage d'air d'une installation de chauffage, ventilation et/ou climatisation d'un véhicule à moteur.

Dans l'exemple d'application illustré, un premier clapet d'air 10 est articulé pivotant de manière connue en soi, au niveau du repère de référence 12. Autrement dit, l'articulation 12 forme ce qu'on appelle un palier fixe ou pivotant. Le clapet 10 est en outre pourvu d'un palier libre 14, qui est formé, dans la forme de réalisation illustrée, d'un trou oblong 16 et d'une broche 15 guidée dans celui-ci. Dans l'exemple d'application illustré, le premier clapet 10 peut être sollicité au moyen d'un élément d'actionnement 2, qui peut être déplacé, dans le dessin, vers le haut et le bas, par exemple par un moteur pas-à-pas non illustré. Lorsque l'élément d'actionnement 2 est déplacé vers le bas, le clapet 10 est pivoté suivant la flèche A par l'articulation en forme de levier au niveau du point de pivot 12. Lors de ce pivotement du clapet d'air 10, la broche 15 glisse dans le trou oblong 16, l'élément 30 étant pivoté autour d'un palier fixe associé 32.

Bien que dans l'exemple d'application illustré, l'élément 30 agisse par rapport à un deuxième clapet 20 d'air 20 en tant qu'élément d'accouplement, il serait aussi envisageable que l'élément 30 se termine en dessous du palier fixe 32, de sorte que seulement un guidage supplémentaire du clapet d'air 10 soit fourni. En variante, il serait aussi envisageable de prévoir, au lieu du deuxième clapet d'air 20, un agencement de ressort, pour précontraindre le clapet d'air 10 dans l'une de ses positions.

Si l'on se réfère à nouveau à la figure 1, l'élément 30 est toutefois prévu sous forme d'élément d'accouplement, et agit à la manière d'un joug ou d'une bascule, et sera donc pivoté autour du palier fixe 32 dans le cas d'un pivotement du clapet d'air 10 dans la direction de la flèche A. Par le pivotement de l'élément d'accouplement 30, une autre broche ou tourillon 25 qui lui est associé(e) se déplace dans le dessin en biais vers la droite et le bas, de sorte qu'au moyen du palier libre 24, formé par la broche 25 et un trou oblong 26, et associé au deuxième clapet d'air 20, un pivotement du deuxième clapet d'air 20 soit permis autour d'un palier fixe 22 associé à lui, dans une direction correspondant à la flèche B. Ainsi, l'exemple d'application illustré permet d'accoupler le mouvement du clapet d'air 10 avec celui du clapet d'air 20 de telle sorte que l'on obtienne un pivotement du deuxième clapet d'air 20 dans le sens opposé ou contraire.

Bien que dans l'exemple d'application illustré, l'élément d'accouplement soit réalisé avec une forme courbe et excentrée par rapport au palier fixe 32, il s'entend que l'élément d'accouplement 30 pourrait aussi être réalisé de manière rectiligne, le palier fixe 32 pouvant lui aussi ne pas être excentrique au cas où, par exemple, les clapets d'air 10 et 20 s'étendent essentiellement en parallèle dans une position de départ. Par le blais des longueurs de levier respectives de l'élément d'accouplement 30, comme du positionnement correspondant des paliers libres 14, 24 sur les clapets d'air 10 et 20, on peut obtenir facilement une cinématique de l'agencement complet optimisée au cas particulier. En outre, il serait aussi possible, par de petites adaptations, de fournir un pivotement de même sens de deux clapets d'air, un accouplement de plus que deux clapets d'air étant aussi réalisable.

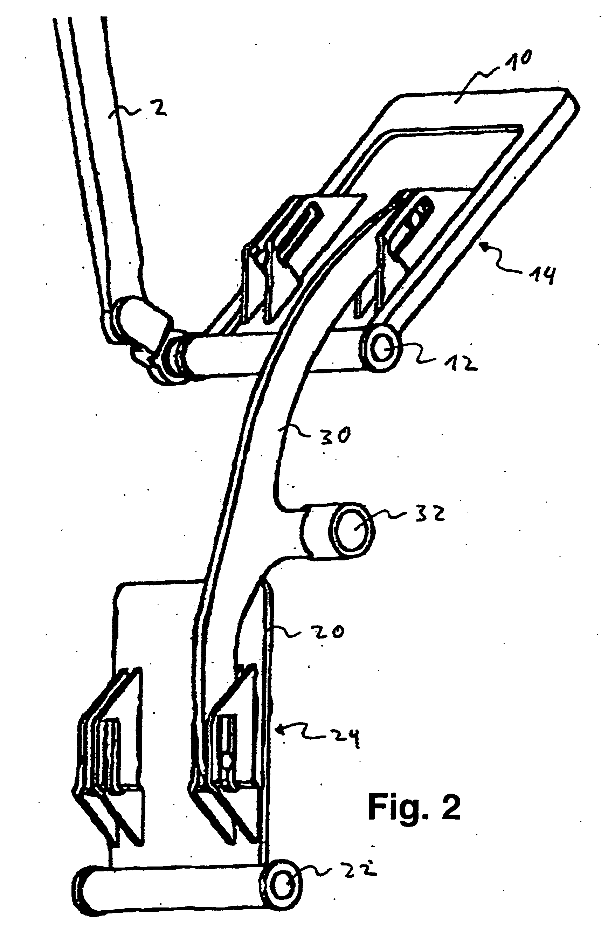

La figure 2 illustre en perspective l'exemple d'application illustré à la figure 1. Comme on peut le voir, chacun des clapets d'air 10, 20 est pourvu d'un palier fixe 12, respectivement 22, et de deux paliers libres 14, respectivement 24, seul un élément d'accouplement 30 entre un palier libre de chacun des clapets d'air 10, 20 étant illustré. Comme on peut le voir dans la figure 2, les trous oblongs 16 et 26 sont réalisés chacun à une extrémité de telle manière que, pour des raisons de montage, les broches ou les tourillons 25 et 15 puissent être insérés facilement par une extrémité.

En résumé, on peut constater que l'agencement de palier de clapet d'air selon l'invention permet de faire interagir un clapet d'air avec d'autres composants de type mobile ou fixe, de sorte que de très nombreuses propriétés de guidage, sollicitations et possibilités d'accouplement puissent être mises en oeuvre. Il convient de comprendre que la présente invention n'est pas limitée à l'exemple d'application illustré et décrit, mais qu'elle englobe au contraire toutes les possibilités qui appartiennent au cadre des revendications annexées.

## Revendications

1. Installation de chauffage, ventilation et/ou climatisation comportant un boîtier de guidage d'air comportant un agencement de palier de clapet d'air comprenant un premier clapet d'air (10) articulé pivotant autour d'un premier palier fixe (12) et pourvu d'un premier palier libre (14) et un deuxième clapet d'air (20) articulé pivotant autour d'un deuxième palier fixe (22) et pourvu d'un deuxième palier libre (24), agencement comportant en outre un élément d'accouplement (30) formé d'une seule pièce pivotant autour d'un palier fixe (32) et relié au premier clapet d'air (10) par l'intermédiaire du premier palier libre (14) et au deuxième clapet d'air (20) par l'intermédiaire du deuxième palier libre (24),
**caractérisé en ce que** le premier clapet d'air (10) est sollicité en rotation par un élément d'actionnement (2) par le biais du premier palier fixe (12).

2. Installation de chauffage, ventilation et/ou climatisation selon la revendication 1, dans lequel le premier palier libre (14) comprend une broche (15) guidée dans un trou oblong (16).

3. Installation de chauffage, ventilation et/ou climatisation selon l'une des revendications 1 à 2, dans lequel le deuxième palier libre (24) comprend une broche (25) guidée dans un trou oblong (26).

4. Installation de chauffage, ventilation et/ou climatisation selon l'une quelconque des revendications 1 ou 3, dans lequel le palier libre (14) permet un mouvement relatif essentiellement dans la direction de l'étendue du clapet d'air (10).

5. Installation de chauffage, ventilation et/ou climatisation selon la revendication 4, dans lequel le deuxième clapet d'air (20) est sollicité par le biais du deuxième palier libre (24).

6. Installation de chauffage, ventilation et/ou climatisation selon l'une quelconque des revendications précédentes, dans lequel le premier palier libre (14) est prévu espacé du premier palier fixe (12).

7. Installation de chauffage, ventilation et/ou climatisation selon l'une quelconque des revendications précédentes, dans lequel le deuxième palier libre (24) est prévu espacé du deuxième palier fixe (22).

8. Installation de chauffage, ventilation et/ou climatisation selon l'une quelconque des revendications précédentes, dans lequel le deuxième clapet d'air (20) est sollicité par l'accouplement de mouvement du premier clapet d'air (10), dans le sens contraire à celui-ci.

9. Installation de chauffage, ventilation et/ou climatisation selon l'une des revendications précédentes, dans lequel le premier clapet d'air (10) et le deuxième clapet d'air (20) ont un mouvement respectif dans le sens contraire l'un de l'autre.

10. Installation de chauffage, ventilation et/ou climatisation selon l'une des revendications précédentes, dans laquelle au moins un palier fixe (12 ; 22 ; 32) est une articulation entre le clapet d'air (10 ; 20) et le boîtier de guidage d'air.

11. Installation de chauffage, ventilation et/ou climatisation selon la revendication 10 dans laquelle le dispositif d'accouplement (30) est en interaction avec le boîtier de guidage d'air par une articulation, en particulier un palier fixe (32).

## Claims

1. Heating, ventilation and/or air conditioning installation comprising an air guiding housing comprising an air valve bearing arrangement comprising a first articulated air valve (10) pivoting about a first fixed bearing (12) and provided with a first free bearing (14) and a second articulated air valve (20) pivoting about a second fixed bearing (22) and provided with a second free bearing (24), said arrangement also comprising a coupling component (30) formed from a single part pivoting about a fixed bearing (32) and connected to the first air valve (10) via the first free bearing (14) and the second air valve (20) via the second free bearing (24), **characterised in that** the first air valve (10) is rotated by an actuation component via the first fixed bearing (12).

2. Heating, ventilation and/or air conditioning installation according to claim 1, wherein the first free bearing (14) comprises a pin (15) guided in an oblong hole (16).

3. Heating, ventilation and/or air conditioning installation according to any of claims 1 to 2, wherein the second free bearing (24) comprises a pin (25) guided in an oblong hole (26).

4. Heating, ventilation and/or air conditioning installation according to any of claims 1 or 3, wherein the free bearing (14) enables a relative movement essentially in the direction of the span of the air valve (10).

5. Heating, ventilation and/or air conditioning installation according to claim 4, wherein the second air valve (20) is actuated via the second free bearing (24).

6. Heating, ventilation and/or air conditioning installation according to any of the above claims, wherein the first free bearing (14) is provided spaced from the first fixed bearing (12).

7. Heating, ventilation and/or air conditioning installation according to any of the above claims, wherein the second free bearing (24) is provided spaced from the second fixed bearing (22).

8. Heating, ventilation and/or air conditioning installation according to any of the above claims, wherein the second air valve (20) is actuated by the coupling of movement of the first air valve (10), in the opposite direction thereto.

9. Heating, ventilation and/or air conditioning installation according to any of the above claims, wherein the first air valve (10) and the second air valve (20) have a respective movement in the opposite direction to each other.

10. Heating, ventilation and/or air conditioning installation according to any of the above claims, wherein at least one fixed bearing (12; 22; 32) is a joint between the air valve (101; 20) and the air guiding housing.

11. Heating, ventilation/or air conditioning installation according to claim 10 wherein the coupling device (30) is in interaction with the air guiding housing via a joint, particularly a fixed bearing (32).

## Patentansprüche

1. Heizungs-, Belüftungs- und/oder Klimasteuerungsanlage, umfassend ein Luftführungsgehäuse, das eine Luftklappenlageranordnung umfasst, die eine erste Luftklappe (10), die schwenkbar um ein erstes festsitzendes Lager (12) gelagert und mit einem ersten Loslager (14) ausgestattet ist, und eine zweite Luftklappe (20) umfasst, die schwenkbar um ein zweites festsitzendes Lager (22) gelagert und mit einem zweiten Loslager (24) ausgestattet ist, wobei die Anordnung des Weiteren ein Kopplungselement (30) umfasst, das aus einem einzigen Teil gebildet ist, das um ein festsitzendes Lager (32) schwenkt und das mit der ersten Luftklappe (10) über das erste Loslager (14) und mit der zweiten Luftklappe (20) über das zweite Loslager (24) verbunden ist,
**dadurch gekennzeichnet, dass** die erste Luftklappe (10) von einem Antriebselement (2) über das erste festsitzende Lager (12) drehend beansprucht wird.

2. Heizungs-, Belüftungs- und/oder Klimasteuerungsanlage nach Anspruch 1, wobei das erste Loslager (14) einen Zapfen (15) umfasst, der in einem Langloch (16) geführt wird.

3. Heizungs-, Belüftungs- und/oder Klimasteuerungsanlage nach einem der Ansprüche 1 bis 2, wobei das zweite Loslager (24) einen Zapfen (25) umfasst, der in einem Langloch (26) geführt wird.

4. Heizungs-, Belüftungs- und/oder Klimasteuerungsanlage nach einem der Ansprüche 1 oder 3, wobei das Loslager (14) eine relative Bewegung ermöglicht, die im Wesentlichen in Richtung der Ausdehnung der Luftklappe (10) verläuft.

5. Heizungs-, Belüftungs- und/oder Klimasteuerungsanlage nach Anspruch 4, wobei die zweite Luftklappe (20) über das zweite Loslager (24) beansprucht wird.

6. Heizungs-, Belüftungs- und/oder Klimasteuerungsanlage nach einem der vorhergehenden Ansprüche, wobei das erste Loslager (14) vom ersten festsitzenden Lager (12) beabstandet vorgesehen ist.

7. Heizungs-, Belüftungs- und/oder Klimasteuerungsanlage nach einem der vorhergehenden Ansprüche, wobei das zweite Loslager (24) vom zweiten festsitzenden Lager (22) beabstandet vorgesehen ist.

8. Heizungs-, Belüftungs- und/oder Klimasteuerungsanlage nach einem der vorhergehenden Ansprüche, wobei die zweite Luftklappe (20) durch die Bewegungskopplung der ersten Luftklappe (10) in die entgegengesetzte Richtung von dieser beansprucht wird.

9. Heizungs-, Belüftungs- und/oder Klimasteuerungsanlage nach einem der vorhergehenden Ansprüche, wobei die erste Luftklappe (10) und die zweite Luftklappe (20) jeweils eine Bewegung in einer zueinander entgegengesetzten Richtung aufweisen.

10. Heizungs-, Belüftungs- und/oder Klimasteuerungsanlage nach einem der vorhergehenden Ansprüche, wobei mindestens ein festsitzendes Lager (12; 22; 32) ein Gelenk zwischen der Luftklappe (10; 20) und dem Luftführungsgehäuse ist.

11. Heizungs-, Belüftungs- und/oder Klimasteuerungsanlage nach Anspruch 10, wobei die Kopplungsvorrichtung (30) über ein Gelenk, insbesondere über ein festsitzendes Lager (32), mit dem Luftführungsgehäuse zusammenwirkt.
